(19) Europäisches Patentamt
European Patent Office
Office européen des brevets

(11) **EP 4 196 818 B1**

(12) **EUROPÄISCHE PATENTSCHRIFT**

(45) Veröffentlichungstag und Bekanntmachung des Hinweises auf die Patenterteilung:
**10.07.2024   Patentblatt 2024/28**

(21) Anmeldenummer: **21752533.6**

(22) Anmeldetag: **30.07.2021**

(51) Internationale Patentklassifikation (IPC):
*G01S 13/90* (2006.01)

(52) Gemeinsame Patentklassifikation (CPC):
**G01S 13/90; G01S 7/023**

(86) Internationale Anmeldenummer:
**PCT/EP2021/071384**

(87) Internationale Veröffentlichungsnummer:
**WO 2022/033895 (17.02.2022 Gazette 2022/07)**

(54) **VERFAHREN UND VORRICHTUNG ZUM BESTIMMEN VON FREQUENZSTÖRUNGEN IN EINEM EMPFANGSSIGNAL EINES AKTIVEN MEHRKANAL-SAR-SYSTEMS**

METHOD AND DEVICE FOR DETERMINING FREQUENCY DISTURBANCES IN A RECEIVED SIGNAL OF AN ACTIVE MULTI-CHANNEL SAR SYSTEM

PROCÉDÉ ET DISPOSITIF PERMETTANT DE DÉTERMINER DES PERTURBATIONS DE FRÉQUENCE DANS UN SIGNAL REÇU D'UN SYSTÈME SAR À CANAUX MULTIPLES ACTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.08.2020   DE 102020210149**

(43) Veröffentlichungstag der Anmeldung:
**21.06.2023   Patentblatt 2023/25**

(73) Patentinhaber: **Deutsches Zentrum für Luft- und Raumfahrt e.V.**
**53227 Bonn (DE)**

(72) Erfinder:
• **PRATS-IRAOLA, Pau**
**82205 Gilching (DE)**
• **NATSUAKI, Ryo**
**Yokohama-shi, Kanagawa 223-0062 (JP)**

(74) Vertreter: **Fink Numrich**
**Patentanwälte PartmbB**
**Paul-Gerhardt-Allee 24**
**81245 München (DE)**

(56) Entgegenhaltungen:
• **NATSUAKI RYO: "RF Interference Detection for Double Receiver-applied Synthetic Aperture Radar", IEICE TECHNICAL REPORT, 15 April 2020 (2020-04-15), XP055849056, Retrieved from the Internet <URL:https://www.ieice.org/ken/paper/20200422 q1xL/eng/>**
• **NATSUAKI RYO ET AL: "Time variant and narrow bandwidth RFI detection in multi-receiver SAR: preliminary study in ALOS-2", RFI 2019 WORKSHOP, 26 September 2019 (2019-09-26), XP055848600, Retrieved from the Internet <URL:https://www.ursi.org/proceedings/2019/rfi 2019/26a7.pdf>**
• **ROSENBERG L ET AL: "Anti-jamming techniques for multichannel SAR imaging", IEE PROCEEDINGS: RADAR, SONAR & NAVIGATION, INSTITUTION OF ELECTRICAL ENGINEERS, GB, vol. 153, no. 3, 15 June 2006 (2006-06-15), pages 234 - 242, XP006026612, ISSN: 1350-2395**

**Beschreibung**

Die Erfindung betrifft ein Verfahren und eine Vorrichtung zum Bestimmen von Frequenzstörungen in einem aus mehreren zeitgleich empfangenen Radarechos bestehenden Empfangssignal eines aktiven Mehrkanal-SAR-Systems mit zumindest zwei Kanälen.

Ein Radar mit synthetischer Apertur (Synthetic Aperture Radar, SAR) dient zur Abbildung und Messung bestimmter Eigenschaften der Erdoberfläche im Rahmen einer Radar-Fernerkundung. Die Grundkonfiguration eines SAR-Systems ist eine Plattform, die ein Radarsystem trägt und sich mit einer konstanten Geschwindigkeit bewegt. Das Radarsystem sendet periodisch eine frequenzmodulierte elektromagnetische Welle aus und empfängt zwischen den Funkwellenübertragungen die Echos der Ziele am Boden. Dieser Zyklus wird als Pulswiederholungsintervall (englisch: Pulse Repetition Inverval, PRI) bezeichnet.

Alle Funkwellen-Frequenzbänder, die für SAR zugelassen sind, werden in den meisten Fällen mit anderen Systemen geteilt, wie z.B. mit Navigationssystemen einschließlich des Global Navigation Satellite Systems (GNSS), Rundfunksendern, Telekommunikationssystemen und Radaren einschließlich anderer SAR-Systeme. Daher empfängt ein SAR-System nicht nur die erwünschten Echos, sondern auch unerwünschte elektromagnetische Wellen. Diese unerwünschten Signale werden als Frequenzstörungen (englisch: Radio Frequency Interference, RFI) oder RFI-Signale bezeichnet.

Die Erkennung und Unterdrückung von Frequenzstörungen (kurz: RFI-Erkennung und -unterdrückung) muss zwischen dem Signalempfang und einem Fokussierungsprozess durchgeführt werden. Die Bildfokussierung ist ein wesentlicher Prozess für die SAR-Analyse. Sie integriert die Radarechos, so dass Ziele identifiziert und weitere Analysen durchgeführt werden können. Die Grundlage des SAR-Fokussierungsverfahrens ist die Anwendung eines angepassten Filters auf die Radarechos, so dass die frequenzmodulierten und zeitvarianten Signale in die Verteilung von Punkten umgewandelt werden, die Ziele am Boden repräsentieren. Die Auflösung des fokussierten SAR-Bildes hängt von der Bandbreite des SAR-Systems für die Entfernungsrichtung (englisch: Range Direction - d.h. die Richtung, die auf die Funkwellenausbreitung ausgerichtet ist) und von der Größe der Azimut-Antenne für die Azimut-Richtung (d.h. die Richtung, die auf die Bewegung der Plattform ausgerichtet ist) ab.

Das Vorhandensein von Frequenzstörungen bzw. RFI-Signalen wirkt sich nachteilig auf die Qualität des fokussierten Bildes ab. Da RFI-Signale anders moduliert sind als SAR-Signale, kann der angepasste Filter sie nicht fokussieren. Daher erscheinen RFI-Signale im fokussierten Bild als farbige, rauschähnliche Signale. Das Farbrauschen verschlechtert die Bildqualität und beeinträchtigt und verhindert die korrekte Verwendung des SAR-Bildes in Anwendungen wie Bilderkennung, Polarimetrie oder Interferometrie.

Um den Effekt von Frequenzstörungen (kurz: RFI) zu erkennen und zu unterdrücken, gibt es im Wesentlichen zwei Ansätze. Der erste Ansatz besteht darin, die Leistung des empfangenen Signals im Spektralbereich zu messen und die RFI-kontaminierten Bänder durch Ausreißererkennung zu lokalisieren, wie dies in der Publikation [R1] beschrieben ist. Bei diesem Ansatz wird angenommen, dass RFI-Signale statistisch unterscheidbar sind, da sie die Radarechos hinsichtlich der Signalleistung dominieren. Der zweite Ansatz besteht darin, die kohärenten Signale von den RFI-kontaminierten Radarechos zu subtrahieren, wie dies in der US 6 166 678 A beschrieben ist. Hier wird angenommen, dass RFI-Signale eine Summierung der Sinussignale mit verschiedenen Frequenzen und Amplituden sind. Die Leistung dieser Sinussignale wird zunächst geschätzt und subtrahiert, so dass nur die tatsächlichen Radarechos übrig bleiben.

Beide beschriebenen Ansätze arbeiten als Bandpassfilter, so dass eine genaue Detektion erforderlich ist, um ein RFI-freies Bild, d.h. ein von Frequenzstörungen freies Bild, mit weniger Störgrößen zu erhalten. Auf der anderen Seite sind Störgrößen unvermeidlich, da die Bandpassfilter keine Information über die Modulation der RFI-Signale umfassen, sondern diese nur statisch aus den empfangenen Daten erkennen können.

Die in den Publikationen [R1]-[R7] beschriebenen Vorgehensweisen gehen davon aus, dass die Anzahl der SAR-Empfänger eins (" 1 ") ist, d.h. die SAR-Empfänger als sog. Single Receiver oder Einkanal-System vorliegen, was in der Praxis nicht zwingend ist.

Die in der Publikation [R1] aufgeführten Verfahren basieren auf dem in den Publikationen [R2] und [R3] beschriebenen grundsätzlichen Ansatz. Im Wesentlichen bestehen diese Ansätze darin, ein außergewöhnliches starkes Signal statistisch zu erfassen und es zu subtrahieren oder zu unterdrücken. Der in der Publikation [R4] beschriebene Ansatz ist einer der Standardansätze und ähnliche Methoden werden in SAR-Systemen weitverbreitet angewandt. Dort werden zeitstationäre und schmalbandige Störungen wie GNSS von den anderen Signalen unterschieden, weil sie bestimmte Frequenzbänder belegen und diese Frequenzbänder daher statistisch stärker sind als die anderen im untersuchten Frequenzbereich. Dabei werden zeitvariable und breitbandige Interferenzen wie Telekommunikation und Überwachungsradar durch Ausnutzung eines ähnlichen Ansatzes unterschieden. Es wird ausgenutzt, dass eine Echo-Empfangsperiode zwischen einer Impulsübertragung und der nächsten einer bestimmten Datenreihe statistisch stärker ist als die anderen benachbarten Datenreihen. Eine Datenreihe bezeichnet eine Datenmenge einer Linie, die die in Range-Richtung verlaufenden Abtastwerte umfasst.

Andere Verfahren nutzen die Eigenschaften der empfangenen Signale aus. In der bereits erwähnten US 6 166 678 A und den Publikationen [R5] und [R7] werden die empfangenen Signale sowohl im Zeit- als auch im Frequenzbereich analysiert, da die RFI-Signale andere Eigenschaften als die Radarechos haben, nämlich z.B. Zeit- und Dopplerfrequenzabhängigkeit.

Die oben genannten Verfahren basieren alle auf einem Einkanal-System. Das heißt, die Verfahren gehen von der Annahme aus, dass es nur einen Empfänger gibt und die Existenz der RFI-Signale durch Vergleich der mehrfachen Puls-Echo-Zyklen erkannt werden können. Das heißt, schmalbandige Frequenzstörungen sollten wiederholt in dem spezifischen Band empfangen werden, so dass das spezifische Frequenzband statistisch stärker als die anderen wird. Auf der anderen Seite sollte ein breitbandiges RFI-Signal nur einmal während der spezifischen PRI-Periode gesendet werden, so dass das RFI-kontaminierte Frequenzband außergewöhnlich stärker wird als die anderen. Wenn diese Annahmen nicht zutreffen, können Frequenzstörungen nicht erkannt werden.

In der Publikation [R7] wird ein Verfahren zur Kohärenzanalyse vorgeschlagen. Hier werden die Abtastwerte einer Datenreihe (d.h. einer als Linie bezeichneten Datenmenge, die die in Range-Richtung verlaufenden Abtastwerte in einem Vektor umfasst) in zwei Abtastwerte aufgeteilt, nämlich ungerade und gerade Abtastwerte. Wenn ein RFI-Signal eine ausreichend schmale Bandbreite aufweist, haben zwei benachbarte Samples ein ähnliches Signal und somit wird ihre Kohärenz, d.h. Ähnlichkeit, hoch. Die beschriebene Kohärenzanalyse kann das Vorhandensein des RFI-Signals, insbesondere bei schmaler Bandbreite nur erkennen, wenn die beiden benachbarten Abtastwerte zum unabhängigen Zeitpunkt empfangen werden und somit physikalisch unabhängig sind.

SAR-Systeme mit mehreren Empfängern (sog. Multi-Receiver oder im Folgenden Mehrkanal-Systeme) wenden eine Mehrkanalkonfiguration an, um ihre Beobachtungsstreifenbreite (Observation Swath) zu vergrößern, indem sie die bekannten Ansätze des diskreten Phasenzentrums (englisch: Discrete Phase Center, DPC), die digitale Strahlformung (englisch: Digital Beam Forming, DBF) und/oder die Along-Track-Interferometrie (ATI) ausnutzen. Der Hauptzweck des Vorsehens mehrerer Empfänger besteht darin, geringfügige Unterschiede der gestreuten Echos in diesen Empfängern zu unterscheiden, so dass zusätzliche Informationen zu den Zielen extrahiert werden können.

Bei mehreren Empfängern des SAR-Systems trifft ein RFI-Signal zu leicht unterschiedlichen Zeiten bei diesen Empfängern ein. Eine Schätzung der Ankunftsrichtung (Direction of Arrival, DoA) wird durchgeführt, um zu ermitteln, aus welcher Richtung die starken Signale einschließlich der Frequenzstörungen ankommen. Eine DoA-Schätzung geht davon aus, dass die Richtung, in der sich die RFI-Signale ausbreiten, besonders von den anderen Radarechos unterschieden werden kann. Nach der Lokalisierung der Richtung der Frequenzstörung werden die SAR-Empfänger derart betrieben, um das Antennendiagramm zur Auslöschung der RFI-Signale zu steuern. Bei diesem Ansatz ergeben sich mehrere Probleme. Zum einen ist die Anzahl der RFI-Quellen, die mit der DoA-Schätzung geortet werden können, durch die Anzahl der Empfänger begrenzt. Darüber hinaus erfordert eine präzise DoA-Schätzung hohe Berechnungskosten, insbesondere wenn die Radarechos und die RFI-Signale aus fast derselben Richtung eintreffen.

Die US 2009/0 091 492 A1 geht davon aus, dass nach dem Fokussierungsprozess Mehrkanal-SAR-Bilder eine Ähnlichkeit zueinander aufweisen, während die RFI-Signale leicht unterschiedlich werden. Die in diesem Dokument beschriebene RFI-Detektionsmethode für ein Mehrkanal-SAR-System ist jedoch speziell für eine transponderähnliche ECM-Technik (Electronic Counter Measure) entwickelt worden. Darüber hinaus ist vorgesehen, die SAR-Bilder zunächst zu fokussieren. Dabei wird davon ausgegangen, dass die SAR-Echos nach dem Fokussierungsprozess Ähnlichkeit zwischen den Kanälen aufweisen. Diese Annahme gilt nur unter der spezifischen ECM-Umgebung, dass das RFI-Signal ein Duplikat des SAR-Impulses ist.

In der Publikation [R8] wird vorgeschlagen, die bekannte Digital Beam Forming (DBF)-Technik zur RFI-Unterdrückung anzuwenden. Hierbei wird das Antennendiagramm derart gesteuert, dass sich die RFI-Quelle im Nullbereich der Empfänger befindet. Dieses Verfahren kann jedoch nur dann sinnvoll angewendet werden, wenn die Empfänger nah beieinander angeordnet sind und die Anzahl der RFI-Quellen kleiner ist als die des Nullpunktes der DBF, was nicht immer der Fall ist.

In der Publikation [R9] wird vorgeschlagen, interferometrische Kohärenz mehrerer Empfänger im Frequenzbereich anzuwenden. Dieses Verfahren funktioniert gut, wenn die Frequenzstörung ausreichend schmalbandig ist und der Beobachtungsbereich wenige helle Echos aufweist, d.h. der beobachtete Oberflächenbereich nur gering reflektierende Elemente umfasst. Dies führt zu einer starken Einschränkung bei breitbandigen RFI-Signalen, insbesondere wenn die Echos von hellen Zielen und RFI gleichzeitig empfangen werden. Helle Ziele sind beispielsweise menschengemachte Strukturen, welche ein starkes Echosignal erzeugen.

In der Publikation [R11] wird ein Verfahren zum Bestimmen von Frequenzstörungen in einem aus mehreren zeitgleich empfangenen Radarechos bestehenden Empfangssignal eines aktiven Mehrkanal-SAR-Systems mit zumindest zwei Kanälen beschrieben. Jeder der zumindest zwei Kanäle umfasst eine Antenne und einen nachgeschalteten Signalverarbeitungspfad. An jeder Antenne der zumindest zwei Kanäle wird ein jeweiliges Radarecho mit darin enthaltenen Frequenzstörungen empfangen und durch den Signalaufbereitungspfad als Aufzeichnung bereitgestellt. Die Bestimmung der Frequenzstörungen in dem Empfangssignal umfasst die Ermittlung einer Kohärenz zwischen den zeitgleich empfangenen Radarechos in der Frequenzdomäne.

Die Publikation [R12] offenbart die Bestimmung der Frequenzstörungen in einem Empfangssignal durch Analyse von zeitgleich empfangenen Radarechos in der Zeitdomäne. Die mathematische Ableitung in [R12] erfolgt unter der Annahme, dass die Wellenform der Interferenz bekannt ist, was in einem realistischen Szenario eine sehr starke Annahme ist.

Es besteht das Bedürfnis, die Erkennung von RFI-Signalen bzw. Frequenzstörungen in einem Empfangssignal eines aktiven Mehrkanal-SAR-Systems mit verbesserter Genauigkeit und geringeren Einschränkungen zu berücksichtigender Randbedingungen durchführen zu können. Gleichzeitig soll die RFI-Erkennung mit geringem rechentechnischem Aufwand möglich sein.

Diese Aufgabe wird gelöst durch die Merkmale der unabhängigen Ansprüche. Vorteilhafte Ausgestaltungen ergeben sich aus den abhängigen Ansprüchen.

Die Erfindung beschreibt ein Verfahren zum Bestimmen von Frequenzstörungen in einem aus mehreren zeitgleich empfangenen Radarechos bestehenden Empfangssignal eines aktiven Mehrkanal-SAR-Systems mit zumindest zwei Kanälen. Jeder der zumindest zwei Kanäle umfasst eine Antenne und einen nachgeschalteten Signalverarbeitungspfad. Der Signalverarbeitungspfad umfasst insbesondere einen Analog-Digital-Wandler und einen Datenspeicher. An jeder Antenne der zumindest zwei Kanäle wird ein jeweiliges Radarecho mit darin enthaltenen Frequenzstörungen empfangen und durch den Signalaufbereitungspfad als Aufzeichnung bereitgestellt. Frequenzstörungen im Sinne dieser Beschreibung sind unerwünschte Signale, die eingangs als RFI-Signale bezeichnet wurden. Hierunter fallen insbesondere alle Funkwellen-Frequenzbänder, die in dem für das Mehrkanal-SAR-System zugelassenen Frequenzband arbeiten, wie z.B. GNSS, Rundfunksender, Telekommunikation und Radare einschließlich anderer SARs. Unter einem aktiven Mehrkanal-SAR-System werden alle Radare mit synthetischer Apertur verstanden, insbesondere auch Sonare mit synthetischer Apertur (Synthetic Aperture Sonar, SAS) ebenso wie alle anderen mit geringfügigen Modifikationen. Die Bestimmung der Frequenzstörungen in dem Empfangssignal umfasst die Ermittlung einer Kohärenz zwischen den zeitgleich empfangenen Radarechos in der Zeitdomäne als auch in der Frequenzdomäne.

Die Erfindung stellt ein Verfahren bereit, mit dem eine Bestimmung von Frequenzstörungen in einem aus mehreren zeitgleich empfangenen Radarechos bestehenden Empfangssignal eines aktiven Mehrkanal-SAR-Systems zuverlässig und mit geringem Rechenaufwand bestimmt werden kann. Zu diesem Zweck erfolgt eine Bestimmung der Kohärenz zwischen den zeitgleich empfangenen Radarechos sowohl in der Zeitdomäne als auch in der Frequenzdomäne. Durch die Kombination der Kohärenzermittlung, sowohl in der Zeitdomäne als auch in der Frequenzdomäne lässt sich die Detektion der Frequenzstörungen verbessern.

Das dem Verfahren zugrundeliegende Prinzip basiert auf der Nutzung der Kohärenz zwischen zeitgleich empfangenen Radarechos an den Antennen des aktiven Mehrkanal-SAR-Systems. Die SAR-Antennen empfangen aufgrund ihres verschobenen Phasenzentrums leicht unterschiedliche Radarechos untereinander. Andererseits werden die in den Radarechos empfangenen Frequenzstörungen, d.h. die RFI-Signale, mit dem gleichen Phasenmuster von allen Kanälen aufgezeichnet. Dies bedeutet, die RFI-Signale zwischen den Kanälen sind kohärenter als die Radarechos des SAR-Systems. Im Vergleich zu herkömmlichen Spektrum-basierten oder Intensitäts-basierten Verfahren erfordert das Kohärenz-basierte Verfahren keine signifikante Signalstärke. Dies ist von Vorteil, da das Verfahren dadurch sowohl bei hellen Zielen (mit starker Rückstreuung, wie z.B. Gebäude) als auch dunklen Zielen (mit schwacher Rückstreuung, wie z.B. flachem Gelände und Wasser) gut einsetzbar ist. Dadurch, dass die Ermittlung einer Kohärenz zwischen den zeitgleich empfangenen Radarechos sowohl in der Zeitdomäne als auch in der Frequenzdomäne vorgenommen wird, können sowohl schmalbandige als auch breitbandige Frequenzstörungen erkannt werden.

Während die aus dem Stand der Technik bekannten Methoden eine bestimmte Anzahl von Abtastwerten erfordern und dadurch einen erheblichen Rechenaufwand sowie großen Speicher und Stromverbrauch nach sich ziehen, erfordert das vorgeschlagene Verfahren, dass die in einer einzigen PRI erfassten Daten mittels Kohärenzanalyse analysiert werden, was zu einem geringen Rechenaufwand führt und insbesondere eine einfache Parallelisierung ermöglicht.

Das vorgeschlagene Verfahren wendet somit einen auf Kohärenz bzw. Ähnlichkeit basierenden RFI-Detektor an, der für das Mehrkanal-SAR-System eine höhere Empfindlichkeit und Genauigkeit aufweist als traditionelle intensitätsbasierte Verfahren. Die Anwendung sowohl in der Zeit- als auch in der Frequenzdomäne ermöglicht eine hohe Leistungsfähigkeit, sowohl bei RFI-Signalen mit schmaler als auch mit breiter Bandbreite.

In einer zweckmäßigen Ausgestaltung umfasst die Bestimmung der Frequenzstörungen in dem Empfangssignal die Ermittlung der Kohärenz zwischen jeweils zwei zeitgleich empfangenen Radarechos in der Zeitdomäne als auch in der Frequenzdomäne. Die Bestimmung der Kohärenz erfolgt somit paarweise zwischen zwei Kanälen und den zeitgleich empfangenen Radarechos, und zwar sowohl in der Zeitdomäne als auch in der Frequenzdomäne. Dies reduziert den rechentechnischen Aufwand zur Bestimmung von Frequenzstörungen.

Gemäß einer weiteren Ausgestaltung ist vorgesehen, dass die Bestimmung der Frequenzstörungen in dem Empfangssignal die parallele Ermittlung der Kohärenz zwischen jeweils zwei zeitgleich empfangenen Radarechos in der Zeitdomäne und in der Frequenzdomäne umfasst. In einer alternativen Ausgestaltung ist vorgesehen, dass die Bestimmung der Frequenzstörungen in dem Empfangssignal die Ermittlung der Kohärenz zwischen jeweils zwei zeitgleich empfangenen Radarechos in der Zeitdomäne und anschließend in der Frequenzdomäne umfasst. In einer weiteren alternativen Ausgestaltung ist vorgesehen, dass die Bestimmung der Frequenzstörungen in dem Empfangssignal die Ermittlung der Kohärenz zwischen jeweils zeitgleich empfangenen Radarechos in der Frequenzdomäne und anschließend in der Zeitdomäne umfasst.

Gemäß einer weiteren zweckmäßigen Ausgestaltung wird zur Ermittlung der Kohärenz in der Zeitdomäne ein Interferogramm aus den Aufzeichnungen zweier Kanäle ermittelt, wobei $I(t) = G_X(t) \cdot G_Y(t-a)^*$ ist, wobei in dieser Formel Gx(t) und $G_Y(t)$ die Aufzeichnungen der Kanäle X, Y, * die komplexe Konjugierte und a die unbekannte Zeitdifferenz, mit der die Frequenzstörung an den Antennen der zwei Kanäle eintrifft, sind.

Aus dem Interfergramm I(t) wird dann gemäß einer zweckmäßigen Ausgestaltung ein interferometrischer Kohärenzwert ermittelt gemäß:

$$\gamma(t, a) = \frac{\left|\sum_{k=-m}^{m} I(t+k)\right|}{\sqrt{\sum_{k=-m}^{m}|G_X(t+k)|^2 \sum_{k=-m}^{m}|G_Y(t-a+k)|^2}}$$

wobei 2m + 1 ein gleitendes Probenintervall (englisch: Sampling Window oder Moving Window) ist und wobei als interferometrischer Kohärenzwert der Wert gewählt wird, der für alle unbekannten getesteten Zeitdifferenzen a in einem Winkelbereich θ = [-90, 90] maximal ist.

In entsprechender Weise wird gemäß einer weiteren zweckmäßigen Ausgestaltung vorgesehen, dass zur Ermittlung der Kohärenz in der Frequenzdomäne ein Interferogramm I(f) aus den durch eine Fouriertransformation transformierten Aufzeichnungen zweier Kanäle ermittelt wird, wobei $I(f) = H_X(f) \cdot H_Y(f)^* e^{i2\pi af} = |H_X(f)|^2 \cdot e^{i2\pi af}$ ist, und wobei in dieser Formel $H_X(f)$ und $H_Y(f)$ Fouriertransformationen der Aufzeichnungen Gx(t) und $G_Y(t)$ der Kanäle X und Y, * die komplexe Konjugierte und a die unbekannte Zeitdifferenz, mit der die Frequenzstörung an den Antennen der zwei Kanäle eintrifft, sind.

In einer weiteren zweckmäßigen Ausgestaltung ist vorgesehen, dass aus dem Interferogramm ein interferometrischer Kohärenzwert ermittelt wird gemäß:

$$\gamma(f, a) = \frac{\left|\sum_{k=-n}^{n} I(f) \cdot e^{-i2\pi af}\right|}{\sqrt{\sum_{k=-n}^{n}|H_X(f+k)| \sum_{k=-n}^{n}|H_y(f+k)|}}$$

wobei 2n + 1 ein gleitendes Probenintervall (englisch: Sampling Window oder Moving Window) ist und wobei als interferometrischer Kohärenzwert der Wert gewählt wird, der für alle unbekannten getesteten Zeitdifferenzen a in einem Winkelbereich θ = [-90, 90] ist.

Es wird angemerkt, dass die Aufzeichnungen $G_X(t)$ und $G_Y(t-a)$ Vektoren sind, die die Datenwerte der in Range-Richtung aufgezeichneten Linien entsprechen.

Um die nunmehr bestimmten Frequenzstörungen bzw. RFI-Signale aus den Radarechos zu entfernen, erfolgt ein Schwellwertvergleich. Hierzu wird ein Schwellwert ermittelt und der interferometrische Kohärenzwert (sowohl der Zeitdomäne und/oder der Frequenzdomäne) wird mit dem ermittelten Schwellwert verglichen. Es wird auf eine Frequenzstörung geschlossen, wenn der interferometrische Kohärenzwert größer als der jeweils ermittelte Schwellwert ist. Es versteht sich, dass sowohl für die Zeitdomäne als auch für die Frequenzdomäne ein jeweiliger Schwellwert ermittelt wird. Insbesondere kann auch für eine jeweilige Range-Linie ein jeweiliger Schwellwert ermittelt werden. Wenn der interferometrischer Kohärenzwert kleiner oder gleich als der ermittelte Schwellwert ist, wird auf keine Frequenzstörung bzw. auf das nicht Vorhandensein des RFI-Signals geschlossen.

Der Schwellenwert kann durch ein Binarisierungsverfahren oder statistisch ermittelt werden. Als Binarisierungsverfahren kann dabei jedes bekannte Binarisierungsverfahren verwendet werden. Beispielsweise kann das in [R10] beschriebene Binarisierungsverfahren verwendet werden.

Gemäß einer weiteren zweckmäßigen Ausgestaltung werden die Werte in den Aufzeichnungen der zwei Kanäle des Zeitraums, für den auf eine Frequenzstörung geschlossen wurde, in der Zeitdomäne und in der Frequenzdomäne durch einen vorgegebenen Wert, insbesondere Null ("0") ersetzt, wodurch die Frequenzstörung aus diesem entfernt ist. Das Entfernen der Frequenzstörung erfolgt dabei zeilenweise, da die Aufzeichnungen Vektoren in Range-Richtung umfassen. Das Entfernen der Frequenzstörung erfolgt sequentiell, zuerst in der Zeitdomäne und anschließend in der Frequenzdomäne, oder umgekehrt.

Die Erfindung bezieht sich darüber hinaus auf ein Computerprogrammprodukt mit Programmcode, der in einem nicht-flüchtigen maschinenlesbaren Datenträger gespeichert ist, der dazu ausgebildet ist, das Verfahren gemäß der Erfindung in einer oder mehreren bevorzugten Ausführungsformen auszuführen, wenn der Programmcode auf einem Computer ausgeführt wird.

Darüber hinaus bezieht sich die Erfindung auf ein Computerprogramm mit einem Programmcode zum Ausführen des Verfahrens gemäß der Erfindung in einer oder mehreren bevorzugten Ausführungsformen, wenn der Programmcode auf einem Computer ausgeführt wird.

Neben dem oben beschriebenen Verfahren bezieht sich die Erfindung auf eine Vorrichtung zum computer-implementierten Bestimmen von Frequenzstörungen in einem aus mehreren zeitgleich empfangenen Radarechos bestehenden Empfangssignal eines aktiven Multikanal-SAR-Systems mit zumindest zwei Kanälen, wobei die Vorrichtung eine Recheneinheit umfasst, die dazu ausgebildet ist, Frequenzstörungen in dem Empfangssignal durch die Ermittlung einer Kohärenz zwischen den zeitgleich empfangenen Radarechos in der Zeitdomäne als auch in der Frequenzdomäne zu bestimmen. Die Vorrichtung ist ferner dazu ausgebildet, ein Verfahren gemäß den abhängigen Merkmalen durchzuführen.

Nachfolgend wird ein Ausführungsbeispiel der Erfindung in Verbindung mit der beigefügten Zeichnung beschrieben. Es zeigen:

Fig. 1    eine schematische Darstellung einer erfindungsgemäßen Vorrichtung zum computer-implementierten Bestimmen von Frequenzstörungen in einem Empfangssignal eines aktiven Multikanal-SAR-Systems gemäß einer ersten Ausführungsform;

Fig. 2    eine schematische Darstellung einer erfindungsgemäßen Vorrichtung zum computer-implementierten Bestimmen von Frequenzstörungen in einem Empfangssignal eines aktiven Multikanal-SAR-Systems gemäß einer zweiten Ausführungsform;

Fig. 3    eine schematische Darstellung des Empfangs von RFI-Signalen für zwei beliebige Empfangseinheiten des in Fig. 1 dargestellten SAR-Systems;

Fig. 4    eine schematische Darstellung des Ablaufs zur Detektion und Unterdrückung von RFI-Signalen in der Zeitdomäne;

Fig. 5    eine schematische Darstellung des Ablaufs zur Detektion und Unterdrückung eines RFI-Signals in der Frequenz-Domäne; und

Fig. 6    ein Ausführungsbeispiel eines SAR-Bilds mit RFI-Signalen und mit entfernten RFI-Signalen.

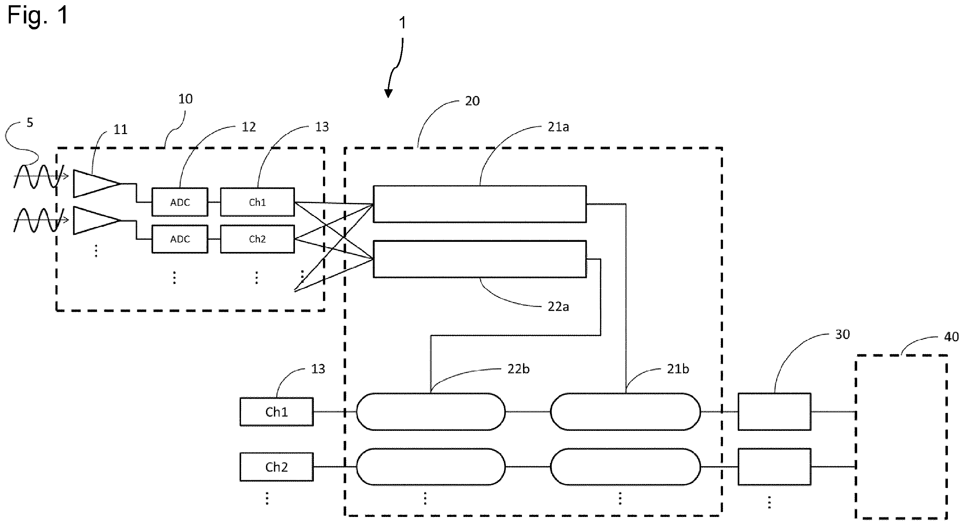

Fig. 1 ist eine schematische Darstellung einer erfindungsgemäßen Vorrichtung zum Bestimmen von Frequenzstörungen in einem Empfangssignal eines aktiven Multikanal-SAR-Systems gemäß einer ersten Ausführungsform. Die Vorrichtung umfasst eine Radareinheit 10, eine Einheit 20 zur Erkennung und Unterdrückung eines RFI-Signals und eine Einheit 40 zum Fokussieren.

Die Radareinheit 10 kann beispielsweise eine Einheit eines SAR-Systems sein. Die Radareinheit 10 besteht aus einer der Anzahl an Kanälen Ch1, Ch2,... entsprechenden Anzahl an Antennen 11, von denen beispielhaft lediglich zwei dargestellt sind. Die Anzahl an Antennen 11 kann jedoch in der Praxis auch größer als zwei sein. Die Radareinheit 10 umfasst darüber hinaus für jeden Kanal Ch1, Ch2,... eine der Antenne 11 nachgeschaltete Signalverarbeitungspfad, der einen Analog-Digital-Wandler (ADC) 12 und einen Datenspeicher 13 umfasst. Die Phasenzentren der Antennen 11 sind in einer dem Fachmann bekannten Weise räumlich verteilt. Die Antennen 11 empfangen gleichzeitig Radarechos und RFI-Signale 5. Die empfangenen Signale werden von den den Antennen 11 zugeordneten Analog-Digital-Wandlern 12 digitalisiert und für jeden Kanal Ch1, Ch2,... in den zugeordneten Datenspeichern 13 gespeichert.

Die Bestimmung der Frequenzstörungen, d.h. der RFI-Signale 5, in dem Empfangssignal erfolgt in der Einheit 20 zur Erkennung und Unterdrückung des RFI-Signals. Die Bestimmung der Frequenzstörungen in dem Empfangssignal durch die Einheit 20 umfasst dabei die Ermittlung einer Kohärenz zwischen den zeitgleich empfangenen Radarechos in der Zeitdomäne als auch in der Frequenzdomäne.

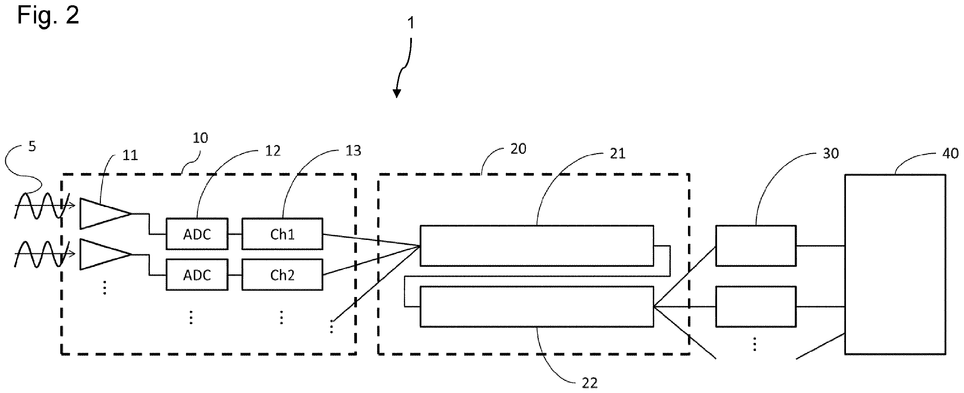

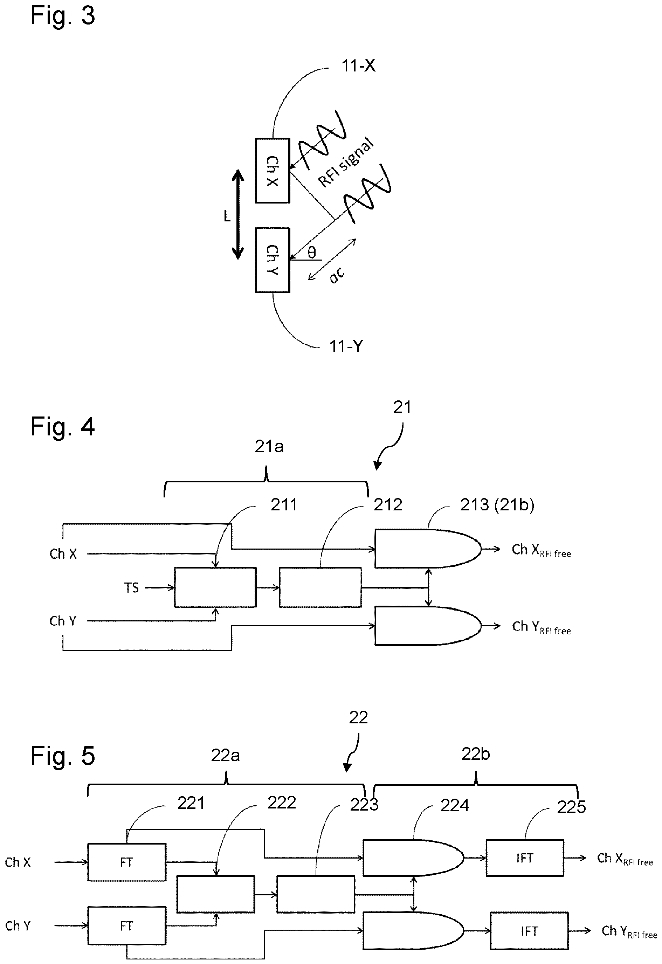

Anhand Fig. 3 werden die dabei dem Verfahren zugrunde liegenden Einzelheiten des RFI-Erkennungs- und Unterdrückungsprozesses verdeutlicht. Fig. 3 zeigt den Empfang der RFI-Signale 11 für zwei beliebige Empfangskanäle Ch X und Ch Y, deren Antennen mit den Bezugszeichen 11-X und 11-Y versehen sind. Bei den Kanälen Ch X und Ch Y handelt es sich um zwei beliebige der Kanäle der in den Fig. 1 und 2 dargestellten Anzahl an Kanälen Ch1, Ch2,... des aktiven Mehrkanal-SAR-Systems 10. Der Abstand zwischen den Antennenphasenzentren von Kanal Ch X und Ch Y ist in Fig. 3 mit L bezeichnet. Wenn das RFI-Signal 5 mit einem Einfallswinkel von $\theta$ auf den Antennen 11-X und 11-Y eintrifft, wird die Zeitdifferenz a zwischen den Antennen näherungsweise gemäß

$$a = \frac{L \sin \theta}{c} \qquad (1)$$

berechnet, wobei c die Lichtgeschwindigkeit ist. Die Einheit 20 zur Erkennung und Unterdrückung des RFI-Signals 5 stellt die Existenz des RFI-Signals 5 dadurch fest, dass die Kanäle Ch X und Ch Y ein identisches Signal mit der Zeitdifferenz a verzögert empfangen.

Wie erläutert, erfolgt die Bestimmung der Frequenzstörungen, d.h. der Existenz des RFI-Signals 5, in dem Empfangssignal durch die Ermittlung einer Kohärenz sowohl in der Zeitdomäne als auch in der Frequenzdomäne. Vorzugsweise erfolgt die Bestimmung der Frequenzstörungen in den Empfangssignal derart, dass diese die Ermittlung der Kohärenz zwischen jeweils zwei zeitgleich empfangenen Radarechos in der Zeitdomäne als auch in der Frequenzdomäne umfasst. Die Bestimmung der Frequenzstörungen in dem Empfangssignal kann gemäß einer Variante derart erfolgen, dass diese eine (zeitlich) parallele Ermittlung der Kohärenz zwischen den jeweils zwei zeitgleich empfangenen Radarechos in der Zeitdomäne und in der Frequenzdomäne umfasst. Dieses Vorgehen ist in dem Ausführungsbeispiel gemäß Fig. 1 illustriert, das später im Detail beschrieben wird. Alternativ kann die Bestimmung der Frequenzstörung in dem Empfangssignal derart erfolgen, dass diese die Ermittlung der Kohärenz zwischen jeweils zwei zeitgleich empfangenen Radarechos zunächst in der Zeitdomäne und anschließend in der Frequenzdomäne, oder umgekehrt, umfasst. Dies ist exemplarisch in dem Ausführungsbeispiel gemäß Fig. 2 beschrieben, das weiter unten im Detail beschrieben wird.

Zunächst wird unter Bezugnahme auf die Fig. 4 und 5 allgemein der Ablauf zur Erkennung und Unterdrückung des RFI-Signals 5 in der Zeitdomäne (Fig. 4) und in der Frequenzdomäne (Fig. 5) beschrieben.

Fig. 4 zeigt eine Ausgestaltung einer Einheit 21 zur RFI-Erkennung und Unterdrückung in der Zeitdomäne. Die Einheit 21 umfasst eine erste Teileinheit 21a zur RFI-Detektionserkennung und eine zweite Teileinheit 21b zur RFI-Unterdrückung. Die Einheit 21 bzw. deren RFI-Detektionseinheit 21a umfasst eine Kohärenzberechnungseinheit 211 und eine Schwellenwert-Einstelleinheit 212. Die zweite Teileinheit 21b zur RFI-Unterdrückung umfasst eine RFI-Unterdrückungseinheit 213.

Der Kohärenzberechnungseinheit 211 werden die in dem Datenspeicher 13 gespeicherten Empfangsdaten für die Kanäle Ch X und Ch Y sowie eine mögliche (d.h. zunächst geschätzte) Zeitdifferenz a zugeführt. Die in dem Datenspeicher 13 enthaltenen Empfangsdaten der Kanäle Ch X und Ch Y werden zudem der RFI-Unterdrückungseinheit 213 zugeführt. Die Empfangsdaten werden nachfolgend als Aufzeichnungen bezeichnet.

Aus Gleichung (1) ergibt sich zwischen den Aufzeichnungen der Kanäle Ch X und Ch Y die folgende Beziehung

$$G_X(t) = G_Y(t-a) \qquad (2)$$

wobei $G_X(t)$ und $G_Y(t)$ die in den jeweiligen Datenspeichern 13 gespeicherten Aufzeichnungen der Kanäle Ch X und Ch Y sind. Das Interferogramm $I(t)$ der Aufzeichnungen von $G_X(t)$ und $G_Y(t)$ kann als

$$I(t) = G_X(t) \cdot G_Y(t-a)^* \qquad (3)$$

geschrieben werden, worin * die komplexe Konjugierte darstellt. Aus Gleichung (3) kann die von der Zeitdifferenz a abhängige interferometrische Kohärenz $\gamma(t, a)$ durch die Kohärenzberechnungseinheit 211 von I(t) berechnet werden als

$$\gamma(t,a) = \frac{\left|\sum_{k=-m}^{m} I(t+k)\right|}{\sqrt{\sum_{k=-m}^{m} |G_X(t+k)|^2 \sum_{k=-m}^{m} |G_Y(t-a+k)|^2}} \qquad (4)$$

worin 2m+1 das gleitende Probenintervall (Moving Window) und | | den absoluten Wert des Operanden darstellen. Da die Zeitdifferenz a unbekannt ist und möglicherweise ein Probenintervall oder eine Abtastperiode überschreitet, werden alle möglichen Zeitintervalle a innerhalb des Winkelbereichs $\theta$ = [-90, 90] Grad getestet, so dass $\gamma(t, a)$ maximal wird.

Als nächstes wird ein Schwellwert $p_t$ für $\gamma(t, a)$ in der Schwellenwert-Einstelleinheit 212 ermittelt. Hierzu wird ein spezifischer Schwellenwert $p_t$ definiert, und wenn $\gamma(t, a)$ diesen überschreitet, wird die Probe als eine RFI-kontaminierte Probe betrachtet. Mathematisch ausgedrückt liegt somit eine Frequenzstörung ("RFI") vor, wenn

$$\gamma(t) > p_t : RFI$$

und keine Frequenzstörung ("No RFI") vor, wenn

$$\gamma(t) \le p_t : No\ RFI$$

Der Schwellenwert $p_t$ kann statistisch oder durch jede bekannte Binarisierungsmethode definiert werden. In den beiden oben genannten Gleichungen ist die Abhängigkeit von der Zeitdifferenz a entfallen, da die Zeitdifferenz im vorhergehenden Schritt maximiert wurde.

In der zweiten Teileinheit 21b zur RFI-Unterdrückung bzw. der RFI-Unterdrückungseinheit 213 werden dann die Proben, die als RFI-kontaminierte Probe betrachtet werden durch Nullwerte ersetzt. Dadurch sind die RFI-Signale in den Aufzeichnungen unterdrückt bzw. gelöscht. Ergebnis ist ein von Frequenzstörungen freies Signal für die Kanäle Ch $X_{RFI\,free}$ und Ch $Y_{RFI\,free}$. Die RFI-freien Signale Ch $X_{RFI\,free}$ und Ch $Y_{RFI\,free}$ für die Kanäle Ch X und Ch Y werden dann in einem Datenspeicher 30 (siehe Figs. 1 und 2) gespeichert und durch die Fokussierungseinheit 40 weiterverarbeitet.

Fig. 5 zeigt den Ablauf zur Erkennung und Unterdrückung des RFI-Signals in der Frequenz-Domäne. Die in Fig. 5 dargestellte Einheit 22 zur RFI-Erkennung und -Unterdrückung umfasst eine erste Teileinheit 22a zur RFI-Erkennung und eine zweite Teileinheit 22b zur RFI-Unterdrückung in der Frequenzdomäne.

Die RFI-Erkennungs- und Unterdrückungseinheit 22 bzw. deren erste Teileinheit 22a zur RFI-Erkennung umfasst eine Einheit 221zur Fourier-Transformation (FT), eine Kohärenzberechnungseinheit 222 und eine Schwellenwert-Einstelleinheit 223. Die zweite Teileinheit 22b zur RFI-Unterdrückung umfasst eine RFI-Unterdrückungseinheit 224 sowie eine Einheit zur inversen Fourier-Transformation (IFT) 225. Die in dem Datenspeicher 13 enthaltenen Aufzeichnungen der Empfangsdaten der Kanäle Ch X und Ch Y werden der Einheit 221 zur Fourier-Transformation zugeführt. Die von der Einheit 221 zur Fourier-Transformation transformierten Aufzeichnungen werden der Kohärenzberechnungseinheit 222 der ersten Teileinheit 22a und der RFI-Unterdrückungseinheit 224 der zweiten Teileinheit 22b zugeführt.

Aus Gleichung (2) geht hervor, dass die Beziehung zwischen der Aufzeichnung der Kanäle Ch X und Ch Y in der Frequenzdomäne die folgende Beziehung hat:

$$H_X(f) = H_Y(f)e^{-i2\pi af} \qquad (6)$$

wobei $H_X(t)$ und $H_Y(t)$ die Fourier-Transformationen von $G_X(t)$ bzw. $G_Y(t)$ sind, welche durch die Einheit 221 zur Fourier-Transformation erzeugt sind. Das Interferogramm I($f$) von $H_X(t)$ und $H_Y(t)$ kann dann geschrieben werden als:

$$I(f) = H_X(f) \cdot H_Y(f)^* e^{i2\pi af} = |H_X(f)|^2 \cdot e^{i2\pi af} \qquad (7)$$

Die interferometrische Kohärenz $\gamma(f, a)$, die durch die Kohärenzberechnungseinheit 222 bestimmt wird, kann dann berechnet werden als

$$\gamma(f, a) = \frac{\left|\sum_{k=-n}^{n} I(f) \cdot e^{-i2\pi af}\right|}{\sqrt{\sum_{k=-n}^{n} |H_X(f+k)| \sum_{k=-n}^{n} |H_Y(f+k)|}} \qquad (8)$$

wobei 2n+1 das Probenintervall (Moving Window) ist. Die interferometrische Kohärenz $\gamma(f, a)$ wird maximal, wenn $e^{i2\pi af}$ in Gleichung (8) durch die Schätzung der Zeitdifferenz a maximiert wird.

Als nächstes wird der Schwellenwert $p_f$ für $\gamma(f,a)$ in der Schwellenwert-Einstelleinheit 223 auf die gleiche Weise wie oben durch statistische Methoden oder ein Binarisierungsverfahren bestimmt. Schließlich wird durch die Anwendung des Schwellenwerts $p_f$ die RFI-kontaminierte Epoche in der RFI-Unterdrückungseinheit 224 eliminiert, indem die RFI-Signale durch Null ersetzt werden. Anschließend erfolgt eine inverse Fourier-Transformation durch die Einheit 225. Ergebnis ist ein von Frequenzstörungen freies Signal für die Kanäle Ch $X_{RFI\,free}$ und Ch $Y_{RFI\,free}$.

Die RFI-freien Signale Ch $X_{RFI\,free}$ und Ch $Y_{RFI\,free}$ für die Kanäle Ch X und Ch Y werden dann in einem Datenspeicher 30 (siehe Figs. 1 und 2) gespeichert und durch die Fokussierungseinheit 40 weiterverarbeitet.

In dem in Fig. 1 dargestellten Ausführungsbeispiel erfolgt in der RFI-Erkennungs- und Unterdrückungseinheit 20 eine parallele RFI-Erkennung in der Zeitdomäne und der Frequenzdomäne durch die ersten Teileinheiten 21a und 22a. Anschließend werden die vorverarbeiteten Signalen den jeweiligen zweiten Teileinheiten 21b für die Zeitdomäne und 22b für die Frequenzdomäne zugeführt, um die Filterung bzw. Unterdrückung der RFI-Signale für die in den Datenspeicher 13 enthaltenen Aufzeichnungen für die Kanäle Ch1, Ch2 vorzunehmen. In dem in Fig. 1 dargestellten Ausführungsbeispiel erfolgt dabei zunächst die RFI-Unterdrückung in der Frequenzdomäne durch die zweite Teileinheit 22b und anschließend die RFI-Unterdrückung in der Zeitdomäne durch die zweite Teileinheit 22b. Dieses Vorgehen könnte auch in umgekehrter Reihenfolge ablaufen.

In dem in Fig. 2 dargestellten Ausführungsbeispiel erfolgt in der RFI-Erkennungs- und Unterdrückungseinheit 20 zunächst durch Einheit 21 zur RFI-Erkennung und Unterdrückung in der Zeitdomäne eine RFI-Erkennung und Unterdrückung in der Zeitdomäne, so, wie dies in Verbindung mit Fig. 4 beschrieben wurde. Die in der Zeitdomäne RFI-freien Signale Ch $X_{RFI free}$ bzw. Ch $Y_{RFI free}$ werden dann als Eingangssignale der RFI-Erkennungs- und Unterdrückungseinheit 22 für die Frequenzdomäne zugeführt. Dort wird dann das in Verbindung mit Fig. 5 beschriebene Verfahren durchlaufen.

In einer alternativen, figürlich nicht dargestellten Ausgestaltung könnte auch zunächst eine RFI-Erkennung und Unterdrückung in der Frequenzdomäne und anschließend in der Zeitdomäne erfolgen.

Das am Ausgang der Einheit 20 zur RFI-Erkennung und Unterdrückung erzeugte Signal Ch $X_{RFI free}$ und Ch $Y_{RFI free}$ wird dann für die jeweiligen Kanäle Ch X und Ch Y in den Datenspeicher 30 eingespeichert und dem Fokussierungsprozess 40 zugeführt.

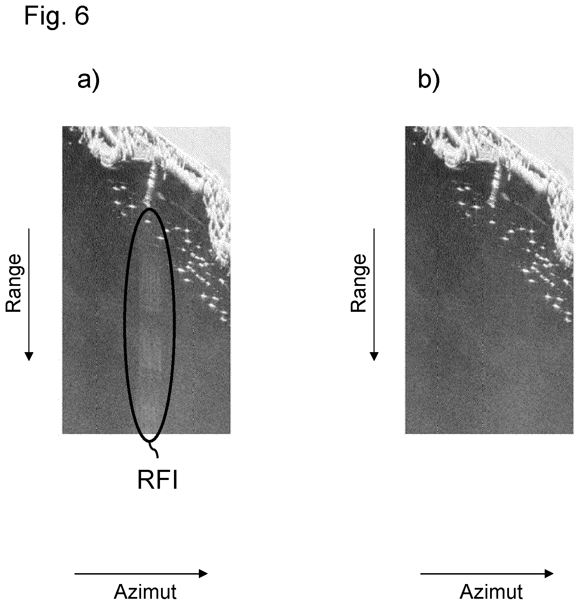

Fig. 6 zeigt beispielhaft ein SAR-Bild mit RFI-Signalen (Fig. 6a in der linken Hälfte) und mit entfernten RFI-Signalen (Fig. 6b in der rechten Hälfte), wobei zusätzlich die Richtung von Range und Azimut angegeben sind. Die in der Fig. 6a enthaltenen Frequenzstörungen sind mit RFI gekennzeichnet und machen sich in parallel verlaufenden Linien in Range-Richtung bemerkbar. Durch die Behandlung der in Fig. 6a dargestellten Daten, z.B. gemäß dem in Fig. 1 gezeigten Verfahren, ergibt sich dann das in Fig. 6b gezeigte Bild ohne RFI-Störungen.

Referenzen

[R1] Tao, M.; Su, J.; Huang, Y.; Wang, L., "Mitigation of Radio Frequency Interference in Synthetic Aperture Radar Data: Current Status and Future Trends" Remote Sens. 2019, 11, 2438. doi: 10.3390/rs11202438

[R2] T. Miller, L. Potter and J. McCorkle, "RFI suppression for ultra-wideband radar," in IEEE Transactions on Aerospace and Electronic Systems, vol. 33, no. 4, pp. 1142-1156, Oct. 1997. doi: 10.1109/7.625096

[R3] A. Reigber and L. Ferro-Famil, "Interference suppression in synthesized SAR images," in IEEE Geoscience and Remote Sensing Letters, vol. 2, no. 1, pp. 45-49, Jan. 2005. doi: 10.1109/LGRS.2004.838419

[R4] F. J. Meyer, J. B. Nicoll and A. P. Doulgeris, "Correction and Characterization of Radio Frequency Interference Signatures in L-Band Synthetic Aperture Radar Data," in IEEE Transactions on Geoscience and Remote Sensing, vol. 51, no. 10, pp. 4961-4972, Oct. 2013. doi: 10.1109/TGRS.2013.2252469

[R5] Mingliang Tao, Feng Zhou, and Zijing Zhang, "Wideband interference mitigation in high-resolution airborne synthetic aperture radar data," IEEE Transactions on Geoscience and Remote Sensing, vol. 54, no. 1, pp. 74-87, 2016.

[R6] Su, J.; Tao, H.; Tao, M.; Xie, J.; Wang, Y.; Wang, L., "Time-Varying SAR Interference Suppression Based on Delay-Doppler Iterative Decomposition Algorithm" Remote Sens. 2018, 10, 1491, doi: 10.3390/rs10091491

[R7] F. J. Meyer, J. B. Nicoll and A. P. Doulgeris, "Characterization and extent of randomly-changing radio frequency interference in ALOS PALSAR data," 2011 IEEE International Geoscience and Remote Sensing Symposium, Vancouver, BC, 2011, pp. 2448-2451. doi: 10.1109/IGARSS.2011.6049706

[R8] Bollian, T.; Osmanoglu, B.; Rincon, R.; Lee, S.-K.; Fatoyinbo, T., "Adaptive Antenna Pattern Notching of Interference in Synthetic Aperture Radar Data Using Digital Beamforming" Remote Sens. 2019, 11, 1346. doi: 10.3390/rs11111346

[R9] Natsuaki, Ryo and Prats, Pau (2019) Time Variant and Narrow Bandwidth RFI Detection in Multi-Receiver SAR: Preliminary Study in ALOS-2.RFI 2019 Workshop, Toulouse, France.

[R10] Nobuyuki Otsu, "A Threshold Selection Method from Gray-Level Histograms", IEEE Transactions on Systems, Man, and Cybernetics, vol. 9, no. 1, pp. 62-66, 1979

[R11] Ryo Natsuaki: "RF Interference Detection for Double Receiver-applied Synthetic Aperture Radar", IEICE Technical Report, 15. April 2020

[R12] L. Rosenberg et al.: ,,"Anti-jamming techniques for multichannel SAR imaging", IEE Proceedings: Radar, Sonar & Navigation, Bd. 153, Nr. 3, 15. Juni 2006, Seiten 234-242

**Patentansprüche**

1. Verfahren zum Bestimmen von Frequenzstörungen in einem aus mehreren zeitgleich empfangenen Radarechos bestehenden Empfangssignal eines aktiven Mehrkanal-SAR-Systems (10) mit zumindest zwei Kanälen (X, Y), wobei jeder der zumindest zwei Kanäle (X, Y) eine Antenne (11) und einen nachgeschalteten Signalverarbeitungspfad (12, 13) umfasst, und wobei an jeder Antenne (11) der zumindest zwei Kanäle (X, Y) ein jeweiliges Radarecho mit darin enthaltenen Frequenzstörungen (5) empfangen und durch den Signalaufbereitungspfad (12, 13) als Aufzeichnung bereitgestellt wird,
   **dadurch gekennzeichnet, dass**
   die Bestimmung der Frequenzstörungen in dem Empfangssignal die Ermittlung einer Kohärenz zwischen den zeitgleich empfangenen Radarechos in der Zeitdomäne als auch in der Frequenzdomäne umfasst.

2. Verfahren nach Anspruch 1, **dadurch gekennzeichnet, dass** die Bestimmung der Frequenzstörungen in dem Empfangssignal die Ermittlung der Kohärenz zwischen jeweils zwei zeitgleich empfangenen Radarechos in der Zeitdomäne als auch in der Frequenzdomäne umfasst.

3. Verfahren nach Anspruch 1 oder 2, **dadurch gekennzeichnet, dass** die Bestimmung der Frequenzstörungen in dem Empfangssignal die parallele Ermittlung der Kohärenz zwischen jeweils zwei zeitgleich empfangenen Radarechos in der Zeitdomäne und in der Frequenzdomäne umfasst.

4. Verfahren nach Anspruch 1 oder 2, **dadurch gekennzeichnet, dass** die Bestimmung der Frequenzstörungen in dem Empfangssignal die Ermittlung der Kohärenz zwischen jeweils zwei zeitgleich empfangenen Radarechos in der Zeitdomäne und anschließend in der Frequenzdomäne umfasst.

5. Verfahren nach Anspruch 1 oder 2, **dadurch gekennzeichnet, dass** die Bestimmung der Frequenzstörungen in dem Empfangssignal die Ermittlung der Kohärenz zwischen jeweils zwei zeitgleich empfangenen Radarechos in der Frequenzdomäne und anschließend in der Zeitdomäne umfasst.

6. Verfahren nach einem der vorhergehenden Ansprüche, **dadurch gekennzeichnet, dass** zur Ermittlung der Kohärenz in der Zeitdomäne ein Interferogramm ($I(t)$) aus den Aufzeichnungen ($G_X(t)$ und $G_Y(t)$) zweier Kanäle (X, Y) ermittelt wird, wobei $I(t) = G_X(t) \cdot G_Y(t - a)^*$ ist, und wobei in dieser Formel * die komplexe Konjugierte und a die unbekannte Zeitdifferenz, mit der die Frequenzstörung an den Antennen (11) der zwei Kanäle (X, Y) eintrifft, sind.

7. Verfahren nach Anspruch 6, **dadurch gekennzeichnet, dass** aus dem Interferogramm ($I(t)$) ein interferometrischer Kohärenzwert ($\gamma(t, a)$) ermittelt wird gemäß:

$$\gamma(t, a) = \frac{|\sum_{k=-m}^{m} I(t + k)|}{\sqrt{\sum_{k=-m}^{m} |G_X(t + k)|^2 \sum_{k=-m}^{m} |G_Y(t - a + k)|^2}}$$

wobei 2m+1 ein gleitendes Probenintervall ist und wobei als interferometrischer Kohärenzwert ($\gamma(t, a)$) der Wert gewählt wird, der für alle unbekannten getesteten Zeitdifferenzen a in einem Winkelbereich $\theta = [-90, 90]$ maximal ist.

8. Verfahren nach einem der vorhergehenden Ansprüche, **dadurch gekennzeichnet, dass** zur Ermittlung der Kohärenz in der Frequenzdomäne ein Interferogramm ($I(f)$) aus den durch eine Fouriertransformation transformierten Aufzeichnungen ($G_X(t)$ und $G_Y(t)$) zweier Kanäle (X, Y) ermittelt wird, wobei $I(f) = H_X(f) \cdot H_Y(f)^* e^{j2\pi af} = |H_X(f)|^2 \cdot e^{j2\pi af}$ ist, und wobei in dieser Formel $H_X(f)$ und $H_Y(f)$ Fouriertransformationen der Aufzeichnungen ($G_X(t)$ und $G_Y(t)$), * die komplexe Konjugierte und a die unbekannte Zeitdifferenz, mit der die Frequenzstörung an den Antennen (11) der zwei Kanäle (X, Y) eintrifft, sind.

9. Verfahren nach Anspruch 8, **dadurch gekennzeichnet, dass** aus dem Interferogramm (*I(f)*) ein interferometrischer Kohärenzwert (*γ(f, a)*) ermittelt wird gemäß:

$$\gamma(f, a) = \frac{\left| \sum_{k=-n}^{n} I(f) \cdot e^{i2\pi af} \right|}{\sqrt{\sum_{k=-n}^{n} |H_X(f + k)| \sum_{k=-n}^{n} |H_y(f + k)|}}$$

wobei 2n+1 ein gleitendes Probenintervall ist und wobei als interferometrischer Kohärenzwert (*γ(f, a)*) der Wert gewählt wird, der für alle unbekannten getesteten Zeitdifferenzen a in einem Winkelbereich *θ*= [-90, 90] maximal ist.

10. Verfahren nach Anspruch 7 und/oder 9, **dadurch gekennzeichnet, dass** ein Schwellwert (*$p_t$*) ermittelt wird und der interferometrische Kohärenzwert (*γ(t, a)*; *γ(f, a)*) mit dem ermittelten Schwellwert (*$p_t$*; *$p_f$*) verglichen wird, wobei auf eine Frequenzstörung geschlossen wird, wenn der interferometrische Kohärenzwerts (*γ(t, a)*; *γ(f,a)*) größer als der ermittelte Schwellwert (*$p_t$*; *$p_f$*) ist.

11. Verfahren nach Anspruch 10, **dadurch gekennzeichnet, dass** der Schwellwert (*$p_t$*; *$p_f$*) durch ein Binarisierungsverfahren oder statistisch ermittelt wird.

12. Verfahren nach Anspruch 9 oder 10, **dadurch gekennzeichnet, dass** die Werte in den Aufzeichnungen (*$G_x(t)$* and *$G_Y(t)$*) der zwei Kanäle (X, Y) des Zeitraums, für den auf eine Frequenzstörung geschlossen wurde, in der Zeitdomäne und in der Frequenzdomäne durch einen vorgegebenen Wert ersetzt werden, wodurch die Frequenzstörung aus diesen entfernt ist.

13. Computerprogrammprodukt mit Programmcode, das auf einem nicht flüchtigen maschinenlesbaren Träger gespeichert ist, zur Durchführung eines Verfahrens nach einem der Ansprüche 1 bis 12, wenn der Programmcode auf einem Computer ausgeführt wird.

14. Computerprogramm mit Programmcode zur Durchführung eines Verfahrens nach einem der Ansprüche 1 bis 12, wenn der Programmcode auf einem Computer ausgeführt wird.

15. Vorrichtung zum Bestimmen von Frequenzstörungen in einem aus mehreren zeitgleich empfangenen Radarechos bestehenden Empfangssignal eines aktiven Mehrkanal-SAR-Systems (10) mit zumindest zwei Kanälen (X, Y), wobei jeder der zumindest zwei Kanäle (X, Y) eine Antenne (11) und einen nachgeschalteten Signalverarbeitungspfad (12, 13) umfasst, und wobei an jeder Antenne (11) der zumindest zwei Kanäle (X, Y) ein jeweiliges Radarecho mit darin enthaltenen Frequenzstörungen (5) empfangen und durch den Signalaufbereitungspfad (12, 13) als Aufzeichnung bereitgestellt wird,
**dadurch gekennzeichnet, dass** die Vorrichtung eine Recheneinheit umfasst, die dazu ausgebildet ist, Frequenzstörungen in dem Empfangssignal durch die Ermittlung einer Kohärenz zwischen den zeitgleich empfangenen Radarechos in der Zeitdomäne als auch in der Frequenzdomäne zu bestimmen.

**Claims**

1. Method for determining frequency interferences in a received signal of an active multi-channel SAR system (10) with at least two channels (X, Y) consisting of a plurality of simultaneously received radar echoes, wherein each of the at least two channels (X, Y) comprises an antenna (11) and a downstream signal processing path (12, 13), and wherein a respective radar echo with frequency interferences (5) contained therein is received at each antenna (11) of the at least two channels (X, Y) and is provided as a recording by the signal processing path (12, 13),
**characterized in that**
the determination of the frequency interferences in the received signal comprises the determination of a coherence between the simultaneously received radar echoes in the time domain as well as in the frequency domain.

2. Method according to claim 1, **characterized in that** the determination of the frequency interferences in the received signal comprises the determination of the coherence between two simultaneously received radar echoes in the time domain as well as in the frequency domain.

3. Method according to claim 1 or 2, **characterized in that** the determination of the frequency interferences in the received signal comprises the parallel determination of the coherence between in each case two simultaneously received radar echoes in the time domain and in the frequency domain.

4. Method according to claim 1 or 2, **characterized in that** the determination of the frequency interferences in the received signal comprises the determination of the coherence between in each case two simultaneously received radar echoes in the time domain and subsequently in the frequency domain.

5. Method according to claim 1 or 2, **characterized in that** the determination of the frequency interferences in the received signal comprises the determination of the coherence between in each case two simultaneously received radar echoes in the frequency domain and subsequently in the time domain.

6. Method according to one of the preceding claims, **characterized in that** an interferogram ($I(t)$) is determined from the recordings ($G_X(t)$ and $G_Y(t)$) of two channels (X, Y) in order to determine the coherence in the time domain, where $I(t) = G_X(t) \cdot G_Y(t - a)^*$, and where in this formula * is the complex conjugate and a is the unknown time difference with which the frequency interference arrives at the antennas (11) of the two channels (X, Y).

7. Method according to claim 6, **characterized in that** an interferometric coherence value ($\gamma(t, a)$) is determined from the interferogram ($I(t)$) according to :

$$\gamma(t,a) = \frac{\left|\sum_{k=-m}^{m} I(t+k)\right|}{\sqrt{\sum_{k=-m}^{m} |G_X(t+k)|^2 \sum_{k=-m}^{m} |G_Y(t-a+k)|^2}}$$

where 2m+1 is a sliding sample interval and where the interferometric coherence value ($\gamma(t, a)$) is chosen to be the value that is maximum for all unknown tested time differences a in an angular range $\theta$ = [-90, 90].

8. Method according to one of the preceding claims, **characterized in that**, for the determination of the coherence in the frequency domain, an interferogram ($I(f)$) is determined from the recordings (($I(f)$)) of two channels (X, Y) transformed by a Fourier transform, where $I(f) = H_X(f) \cdot H_Y(f)^* e^{i2\pi af} = |H_X(f)|^2 \cdot e^{i2\pi af}$ and where in this formula $H_x(f)$ and $H_y(f)$ are Fourier transforms of the recordings ($G_x(t)$ und $G_Y(t)$), * is the complex conjugate and a is the unknown time difference with which the frequency interference arrives at the antennas (11) of the two channels (X, Y).

9. Method according to claim 8, **characterized in that** an interferometric coherence value ($\gamma(f, a)$) is determined from the interferogram (($I(f)$)) according to:

$$\gamma(f,a) = \frac{\left|\sum_{k=-n}^{n} I(f) \cdot e^{i2\pi af}\right|}{\sqrt{\sum_{k=-n}^{n} |H_X(f+k)| \sum_{k=-n}^{n} |H_y(f+k)|}}$$

where 2n+1 is a sliding sample interval and where the interferometric coherence value ($\gamma(f, a)$) is chosen to be the value that is maximum for all unknown tested time differences a in an angular range $\theta$ = [-90, 90].

10. Method according to claim 7 and/or 9, **characterized in that** a threshold value ($p_t$) is determined and the interferometric coherence value ($\gamma(t, a)$; $\gamma(f, a)$) is compared with the determined threshold value ($p_t$; $p_f$), a frequency interference being inferred if the interferometric coherence value ($\gamma(t, a)$; $\gamma(f, a)$) is greater than the determined threshold value ($p_t$; $p_f$).

11. Method according to claim 10, **characterized in that** the threshold value ($p_t$; $p_f$) is determined by a binarization method or statistically.

12. Method according to claim 9 or 10, **characterized in that** the values in the recordings ($G_X(t)$ and $G_Y(t)$) of the two channels (X, Y) of the time period for which frequency interference has been inferred are replaced in the time domain and in the frequency domain by a predetermined value, whereby the frequency interference is removed therefrom.

13. Computer program product comprising program code stored on a non-volatile machine-readable medium for carrying out a method according to any one of claims 1 to 12 when the program code is executed on a computer.

14. Computer program comprising program code for carrying out a method according to any one of claims 1 to 12, when the program code is executed on a computer.

15. Device for determining frequency interferences in a received signal of an active multi-channel SAR system (10) consisting of a plurality of simultaneously received radar echoes with at least two channels (X, Y), wherein each of the at least two channels (X, Y) comprises an antenna (11) and a downstream signal processing path (12, 13), and wherein a respective radar echo with frequency interferences (5) contained therein is received at each antenna (11) of the at least two channels (X, Y) and is provided as a recording by the signal processing path (12, 13), **characterized in that** the device comprises a computing unit which is designed to determine frequency interferences in the received signal by determining a coherence between the simultaneously received radar echoes in the time domain as well as in the frequency domain.

## Revendications

1. Procédé de détermination de perturbations de fréquence dans un signal de réception constitué de plusieurs échos radar reçus simultanément d'un système RSO à canaux multiples actif (10) avec au moins deux canaux (X, Y), dans lequel chacun des au moins deux canaux (X, Y) comprend une antenne (11) et un chemin de traitement de signal commuté en aval (12, 13), et dans lequel un écho radar respectif avec des perturbations de fréquence contenues en son sein (5) est reçu au niveau de chaque antenne (11) des au moins deux canaux (X, Y) et mis à disposition en tant qu'enregistrement par le chemin de traitement de signal (12, 13), **caractérisé en ce que** la détermination des perturbations de fréquence dans le signal de réception comprend la détermination d'une cohérence entre les échos radar reçus simultanément dans le domaine temporel ainsi que dans le domaine de fréquence.

2. Procédé selon la revendication 1, **caractérisé en ce que** la détermination des perturbations de fréquence dans le signal de réception comprend la détermination de la cohérence entre à chaque fois deux échos radar reçus simultanément dans le domaine temporel ainsi que dans le domaine de fréquence.

3. Procédé selon la revendication 1 ou 2, **caractérisé en ce que** la détermination des perturbations de fréquence dans le signal de réception comprend la détermination parallèle de la cohérence entre à chaque fois deux échos radar reçus simultanément dans le domaine temporel et dans le domaine de fréquence.

4. Procédé selon la revendication 1 ou 2, **caractérisé en ce que** la détermination des perturbations de fréquence dans le signal de réception comprend la détermination de la cohérence entre à chaque fois deux échos radar reçus simultanément dans le domaine temporel, puis dans le domaine de fréquence.

5. Procédé selon la revendication 1 ou 2, **caractérisé en ce que** la détermination des perturbations de fréquence dans le signal de réception comprend la détermination de la cohérence entre à chaque fois deux échos radar reçus simultanément dans le domaine de fréquence, puis dans le domaine temporel.

6. Procédé selon une des revendications précédentes, **caractérisé en ce qu'**un interférogramme (*I(t)*) est déterminé à partir des enregistrements (*$G_X(t)$* et *$G_Y(t)$*) de deux canaux (X, Y) en vue de la détermination de la cohérence dans le domaine temporel, dans lequel $I(t) = G_X(t) \cdot G_Y(t - a)^*$, et dans lequel dans cette formule, * est le conjugué complexe et a la différence de temps inconnue avec laquelle la perturbation de fréquence arrive au niveau des antennes (11) des deux canaux (X, Y).

7. Procédé selon la revendication 6, **caractérisé en ce qu'**une valeur de cohérence interférométrique (*$\gamma(t, a)$*) est déterminée à partir de l'interférogramme (*I(t)*) conformément à :

$$\gamma(t,a) = \frac{|\sum_{k=-m}^{m} I(t+k)|}{\sqrt{\sum_{k=-m}^{m} |G_X(t+k)|^2 \sum_{k=-m}^{m} |G_Y(t-a+k)|^2}}$$

dans laquelle 2m+1 est un intervalle d'échantillonnage glissant et dans laquelle la valeur qui est maximale pour toutes les différences de temps testées inconnues a dans une région angulaire $\theta$ = [-90, 90] est choisie en tant que valeur de cohérence interférométrique ($\gamma(t, a)$).

8. Procédé selon une des revendications précédentes, **caractérisé en ce qu'**un interférogramme ($I(f)$) est déterminé à partir des enregistrements ($G_x(t)$ et $G_Y(t)$) transformés par une transformation de Fourier de deux canaux (X, Y) en vue de la détermination de la cohérence dans le domaine de fréquence, dans lequel $I(f) = H_X(f) \cdot H_Y(f)^* e^{i2\pi af} = |H_X(f)|^2 \cdot e^{i2\pi af}$, et dans lequel dans cette formule, $H_X(f)$ et $H_y(f)$ sont des transformations de Fourier des enregistrements ($G_x(t)$ et $G_Y(t)$), * le conjugué complexe et a la différence de temps inconnue avec laquelle la perturbation de fréquence arrive au niveau des antennes (11) des deux canaux (X, Y).

9. Procédé selon la revendication 8, **caractérisé en ce qu'**une valeur de cohérence interférométrique ($\gamma(f, a)$) est déterminée à partir de l'interférogramme ($I(f)$) conformément à :

$$\gamma(f, a) = \frac{\left|\sum_{k=-n}^{n} I(f) \cdot e^{i2\pi af}\right|}{\sqrt{\sum_{k=-n}^{n}|H_X(f + k)| \sum_{k=-n}^{n}|H_y(f + k)|}}$$

dans laquelle 2n+1 est un intervalle d'échantillonnage glissant et dans laquelle la valeur qui est maximale pour toutes les différences de temps testées inconnues a dans une région angulaire $\theta$ = [-90, 90] est choisie en tant que valeur de cohérence interférométrique ($\gamma(f, a)$).

10. Procédé selon la revendication 7 et/ou 9, **caractérisé en ce qu'**une valeur seuil ($p_t$) est déterminée et la valeur de cohérence interférométrique ($\gamma(t, a)$; $\gamma(f,a)$) est comparée à la valeur seuil déterminée ($p_t$; $p_f$), dans lequel il est conclu à une perturbation de fréquence lorsque la valeur de cohérence interférométrique ($\gamma(t, a)$; $\gamma(f,a)$) est supérieure à la valeur seuil déterminée ($p_t$; $p_f$).

11. Procédé selon la revendication 10, **caractérisé en ce que** la valeur seuil ($p_t$; $p_f$) est déterminée par un procédé de binarisation ou de manière statistique.

12. Procédé selon la revendication 9 ou 10, **caractérisé en ce que** les valeurs dans les enregistrements ($G_x(t)$ et $G_Y(t)$) des deux canaux (X, Y) de la période pour laquelle il a été conclu à une perturbation de fréquence sont remplacées dans le domaine temporel et dans le domaine de fréquence par une valeur prédéfinie, moyennant quoi la perturbation de fréquence est éloignée de celles-ci.

13. Produit de programme informatique avec du code de programme, qui est mémorisé sur un support transitoire lisible par machine, pour la réalisation d'un procédé selon une des revendications 1 à 12 lorsque le code de programme est exécuté sur un ordinateur.

14. Programme informatique avec du code de programme pour la réalisation d'un procédé selon une des revendications 1 à 12 lorsque le code de programme est exécuté sur un ordinateur.

15. Dispositif de détermination de perturbations de fréquence dans un signal de réception constitué de plusieurs échos radar reçus simultanément d'un système RSO à canaux multiples actif (10) avec au moins deux canaux (X, Y), dans lequel chacun des au moins deux canaux (X, Y) comprend une antenne (11) et un chemin de traitement de signal commuté en aval (12, 13), et dans lequel un écho radar respectif avec des perturbations de fréquence contenues en son sein (5) est reçu au niveau de chaque antenne (11) des au moins deux canaux (X, Y) et mis à disposition en tant qu'enregistrement par le chemin de traitement de signal (12, 13),
**caractérisé en ce que** le dispositif comprend un module de traitement qui est réalisé pour déterminer des perturbations de fréquence dans le signal de réception par la détermination d'une cohérence entre les échos radar reçus simultanément dans le domaine temporel ainsi que dans le domaine de fréquence.

Fig. 1

Fig. 2

## Fig. 3

## Fig. 4

## Fig. 5

Fig. 6

a)

b)

RFI

Range

Azimut

Range

Azimut

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6166678 A
- US 20090091492 A1

### In der Beschreibung aufgeführte Nicht-Patentliteratur

- **TAO, M. ; SU, J. ; HUANG, Y. ; WANG, L.** Mitigation of Radio Frequency Interference in Synthetic Aperture Radar Data: Current Status and Future Trends. *Remote Sens.,* 2019, vol. 11, 2438
- **T. MILLER ; L. POTTER ; J. MCCORKLE.** RFI suppression for ultra-wideband radar. *IEEE Transactions on Aerospace and Electronic Systems,* Oktober 1997, vol. 33 (4), 1142-1156
- **A. REIGBER ; L. FERRO-FAMIL.** Interference suppression in synthesized SAR images. *IEEE Geoscience and Remote Sensing Letters,* Januar 2005, vol. 2 (1), 45-49
- **F. J. MEYER ; J. B. NICOLL ; A. P. DOULGERIS.** Correction and Characterization of Radio Frequency Interference Signatures in L-Band Synthetic Aperture Radar Data. *IEEE Transactions on Geoscience and Remote Sensing,* Oktober 2013, vol. 51 (10), 4961-4972
- **MINGLIANG TAO ; FENG ZHOU ; ZIJING ZHANG.** Wideband interference mitigation in high-resolution airborne synthetic aperture radar data. *IEEE Transactions on Geoscience and Remote Sensing,* 2016, vol. 54 (1), 74-87
- **SU, J. ; TAO, H. ; TAO, M. ; XIE, J. ; WANG, Y. ; WANG, L.** Time-Varying SAR Interference Suppression Based on Delay-Doppler Iterative Decomposition Algorithm. *Remote Sens.,* 2018, vol. 10, 1491
- **F. J. MEYER ; J. B. NICOLL ; A. P. DOULGERIS.** Characterization and extent of randomly-changing radio frequency interference in ALOS PALSAR data. *2011 IEEE International Geoscience and Remote Sensing Symposium, Vancouver, BC,* 2011, 2448-2451
- **BOLLIAN, T. ; OSMANOGLU, B. ; RINCON, R. ; LEE, S.-K. ; FATOYINBO, T.** Adaptive Antenna Pattern Notching of Interference in Synthetic Aperture Radar Data Using Digital Beamforming. *Remote Sens.,* 2019, vol. 11, 1346
- **NATSUAKI, RYO ; PRATS, PAU.** *Time Variant and Narrow Bandwidth RFI Detection in Multi-Receiver SAR: Preliminary Study in ALOS-2.RFI 2019 Workshop, Toulouse, France,* 2019
- **NOBUYUKI OTSU.** A Threshold Selection Method from Gray-Level Histograms. *IEEE Transactions on Systems, Man, and Cybernetics,* 1979, vol. 9 (1), 62-66
- **RYO NATSUAKI.** RF Interference Detection for Double Receiver-applied Synthetic Aperture Radar. *IEICE Technical Report,* 15. April 2020
- **L. ROSENBERG et al.** Anti-jamming techniques for multichannel SAR imaging. *IEE Proceedings: Radar, Sonar & Navigation,* 15. Juni 2006, vol. 153 (3), 234-242